(19) Europäisches Patentamt
European Patent Office
Office européen des brevets

(11) **EP 3 079 121 A1**

(12) **EUROPEAN PATENT APPLICATION**

(43) Date of publication:
**12.10.2016 Bulletin 2016/41**

(51) Int Cl.:
***G06T 7/00*** *(2006.01)*  ***H04N 5/232*** *(2006.01)*

(21) Application number: **15305512.4**

(22) Date of filing: **07.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Seifi, Mozhdeh**
  **35576 Cesson Sévigné Cedex (FR)**
• **Sabater, Neus**
  **35576 Cesson Sévigné Cedex (FR)**
• **Drazic, Valter**
  **35576 Cesson Sévigné Cedex (FR)**

(74) Representative: **Huchet, Anne et al**
**Technicolor**
**European Patent Operations**
**1-5, Rue Jeanne d'Arc**
**92443 Issy-les-Moulineaux cedex (FR)**

(54) **Plenoptic camera calibration**

(57)    A method of calibrating a plenoptic camera that comprises a camera lens, a lenslet array comprising a plurality of microlenses and a photosensor array, comprises obtaining (53) information representative of the centers of the microlenses and calibrating (55) the plenoptic camera from the information representative of the centers of the microlenses.

A plenoptic camera implementing the method of calibration is also disclosed.

Fig 5

**Description**

**1. Technical domain**

The present disclosure relates to the domain of plenoptic camera and light-field acquisition devices and methods. The present disclosure also relates to the domain of calibrating a plenoptic camera.

**2. Background art**

According to the background art, it is known to acquire different views of a same scene with a plenoptic camera, also called light-field camera. To obtain the different views, a raw image (comprising the data collected by a photosensor array of the plenoptic camera) is demosaiced and de-multiplexed. The demosaicing enables to recover a full color raw image, i.e. to recover full color information (for example RGB information, RGB standing for "Red", "Green" and "Blue") for the pixels of the raw image while the raw image acquired with the plenoptic camera associates only one color component (R, G or B for example) with each pixel. The demultiplexing performed after the demosaicing enables to recover the different views of the scene, i.e. to group the pixels of the demosaiced raw image according to the view they belong to.

To recover the different views of the scene, it is necessary to calibrate the raw image acquired with the plenoptic camera. The main goal of this calibration is to identify center point locations of each microlens micro-image formed on the photosensor array of the plenoptic camera. Due to various complications, the process pertaining to the identification of the center point location is plagued by various issues leading to mismatches between the estimated centers all over the photosensor array with the single location of the main lens sub-aperture which is supposed to be optically conjugated with those central pixels. If the photosensor array is provided with a Bayer type Color Filter Array (CFA), it impacts even more the precision of the estimation. If a global optimization is used to estimate the centers, such an optimization typically cannot take into account fabrication dispersion of individual microlenses in size and relative positions in the lenslet array. Moreover there is an ambiguity in the estimation of the center if the estimated position falls in the vicinity of the border between some pixels/photosensors: the nearest integer rounding to select the right pixel has a great probability to select a pixel which is not the central pixel of the micro-image.

Moreover, each time the main lens has undergone a change, either in zooming or in focalization, the micro-image centers have to be estimated again. This creates an inconvenience because it is not very handy to calibrate the system each time the main lens has been tweaked for a snapshot. If the system is also video capable, this means also that zooming while filming is prohibited.

**3. Summary**

The purpose of the present disclosure is to overcome at least one of these disadvantages of the background art.

The present disclosure relates to a plenoptic camera comprising a camera lens, a lenslet array comprising a plurality of microlenses, a photosensor array, the plenoptic camera further comprising:

- means for obtaining information representative of the centers of the microlenses;
- means for calibrating the plenoptic camera from the information.

The present disclosure also relates to a plenoptic camera comprising a camera lens, a lenslet array comprising a plurality of microlenses, a photosensor array, the plenoptic camera further comprising:

- a retrieving unit configured to obtain information representative of the centers of the microlenses, for example from a memory;
- a processing unit configured to calibrate the plenoptic camera from the information.

According to a particular characteristic, the plenoptic camera further comprises a memory comprising the information, the information being obtained from the memory.

Advantageously, the means for obtaining correspond to a processing unit, e.g. a processor, configured to determine the information from a stack of at least one white image, each white image of the stack being provided for a different parameter representative of a length between the camera lens and the lenslet array.

According to a specific characteristic, the processing unit is further configured to, for each microlens:

- for each white image, compute first coordinates of the center of the microlens from parameters representative of the position of the microlens with regard to the photosensor array and of a value representative of a shift between the position of the microlens with regard to the photosensor array and a position of a micro-image associated with the microlens formed on the photosensor array,

- for each white image, determine values of the parameters representative of the position of the microlens minimizing an error on the computing of the first coordinates by using a plurality of white images of the stack,

- determine information representative of the center of the microlens from the determined values of the parameters representative of the position of the microlens.

Advantageously, the processing unit is further configured to compute the value representative of a shift as a function of an index associated with the microlens, a parameter representative of a size of the microlens, a parameter representative of a distance between the lenslet array and the photosensor array, and the parameter representative of the length between the camera lens and the lenslet array.

According to another characteristic, the processing unit is further configured to compute a refined value of the parameter representative of the length between the camera lens and the lenslet array based on the determined information.

Advantageously, the processing unit is further configured to compute a refined value for at least one of said parameter representative of the size of the microlens and the parameter representative of the distance between the lenslet array and the photosensor array based on the determined information and on the determined values of the parameters representative of the position of the microlens.

The present disclosure also relates to a method of calibrating a plenoptic camera, the plenoptic camera comprising a camera lens, a lenslet array comprising a plurality of microlenses and a photosensor array, the method comprising:

- obtaining information representative of the centers of the microlenses;
- calibrating the plenoptic camera from the information.

Advantageously, the obtaining comprises retrieving the information from a storage device.

According to a specific characteristic, the obtaining comprises determining the information from a stack of at least one white image, each white image of the stack being provided for a different parameter representative of a length between the camera lens and the lenslet array.

According to another characteristic, the determining comprises, for each microlens:

- for each white image, computing first coordinates of the center of the microlens from parameters representative of the position of the microlens with regard to the photosensor array and of a value representative of a shift between the position of the microlens with regard to the photosensor array and a position of a micro-image associated with the microlens formed on the photosensor array,
- for each white image, determining values of the parameters representative of the position of the microlens minimizing an error on the computing of the first coordinates by using a plurality of white images of the stack,
- determining information representative of the center of the microlens from the determined values of the parameters representative of the position of the microlens.

According to a specific characteristic, the value representative of a shift is computed as a function of an index associated with the microlens, a parameter representative of a size of the microlens, a parameter representative of a distance between the lenslet array and the photosensor array, and the parameter representative of the length between the camera lens and the lenslet array.

According to another characteristic, the method further comprises computing a refined value of the parameter representative of the length between the camera lens and the lenslet array based on the determined information.

Advantageously, the method further comprises computing a refined value for at least one of the parameter representative of the size of the microlens and the parameter representative of the distance between the lenslet array and the photosensor array based on the determined information and on the determined values of the parameters representative of the position of the microlens.

The invention also relates to a telecommunication device comprising the plenoptic camera.

The invention also relates to a computer program product comprising instructions of program code for executing at least a step of the method of calibrating a plenoptic camera, when the program is executed on a computer.

The invention also relates to a processor readable medium having stored therein instructions for causing a processor to perform at least a step of the method of calibrating a plenoptic camera.

## 4. List of figures

The present disclosure will be better understood, and other specific features and advantages will emerge upon reading the following description, the description making reference to the annexed drawings wherein:

- figure 1 shows a plenoptic camera, according to a particular embodiment of the present principles;
- figure 2 shows the position of microlenses with regard to the photosensor array, according to a particular embodiment of the present principles;
- figure 3 shows micro-images associated with microlenses of the lenslet array of the plenoptic camera of figure 1, according to a particular embodiment of the present principles;
- figures 4 shows a method of calibrating the plenoptic camera of figure 1, according to a particular embodiment of the present principles;
- figure 5 shows the determining of information representative of the centers of the microlenses of the plenoptic camera of figure 1, according to a particular embodiment of the present principles;
- figure 6 shows a telecommunication device comprising the plenoptic camera of figure 1, according to a particular embodiment of the present principles.

## 5. Detailed description of embodiments.

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

According to a particular embodiment of the present principles, the calibration of a plenoptic camera comprises obtaining information representative of the centers of the microlenses of the lenslet array of the plenoptic camera, for example by retrieving the information from a storage device or by determining it computationally. This information corresponds for example to the coordinates of the center of each microlens. Knowing the centers of the microlenses enable to determine easily the centers of each micro-image formed on a raw image of a scene acquired with the plenoptic camera, which then enables to perform the demultiplexing to obtain the different images of the scene. The centers of the microlenses have the advantage of not varying with the change of focus and/or zoom in contrast to the centers of the micro-images. Basing the calibration of the plenoptic image on the information representative of the centers of the microlenses instead of determining directly the centers of the micro-images (i.e. without the information representative of the centers of the microlenses) makes the calibration process easier and quicker with regard to calibration method of the prior art, especially method based on a direct estimation of the centers of the micro-images from white images.

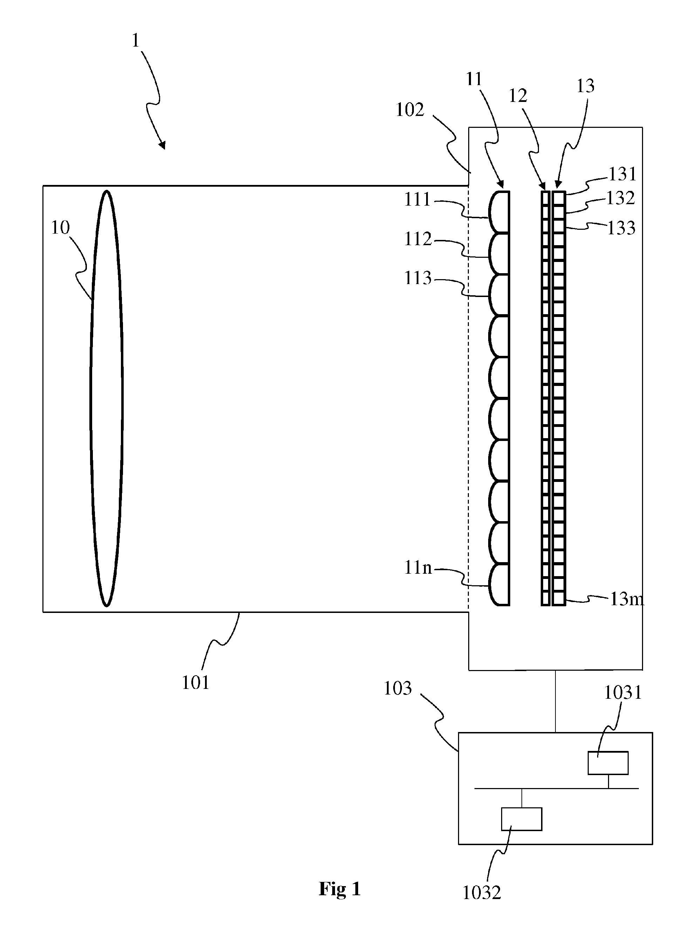

**Figure 1** shows a plenoptic camera 1 according to a particular embodiment of the present principles. The plenoptic camera comprises a lens unit 101 (corresponding to an optical assembly) and a camera body 102.

The lens unit 101 is advantageously adapted to be associated with the camera body 102. The camera body 102 comprises a photosensor array 13, which comprises a plurality m of photosensors 131, 132, 133 to 13m. Each photosensor corresponds to a pixel of the raw image of the scene acquired with the photosensor array, with each pixel encompassing a part (also called a point) of the scene. For purposes of illustration, the photosensor array 13 is shown with a relative small number of photosensors 131 to 13m. Naturally, the number of photosensors is not limited by the illustration of figure 1 but extends to any number of photosensors, for example several thousand or several millions of photosensors. For example in a 12.4 megapixel camera, a pixel will correspond to a photosensor (e.g. corresponding to an array of 4088 x 3040 pixels / photosensors). A color filter array (CFA) 12 may be arranged on the photosensor array 13. The CFA 12 typically arranges RGB (Red, Green and Blue) color filters on the photosensor array, the RGB arrangement taking for the example the form of a Bayer filter mosaic. According to a variant, a CFA is arranged on the lenslet array 11 (in addition to the CFA 12 or in replacement of the CFA 12). For associating the lens unit 101 with the camera body 102, the lens unit 101 comprises a first attaching part and the camera body 102 comprises a second attaching part, the first and second attaching parts being compatible with each other. Thanks to the first and second attaching parts, the lens unit 101 may be clipped onto the camera body 102 or the lens unit 101 may be screwed with the camera body 102. An example of such first and second attaching parts of a lens unit configured to be associated with a camera body may be found in the Japanese patent application JP2013-105151A, which was published on May 30, 2013. The first and second attaching parts are configured in such a way that, once the lens unit 101 and the camera body 102 have been put together, the lens unit 101 and the camera body 102 form a plenoptic camera configured for acquiring multiple views of a scene at each acquisition of the scene. To this end, the camera body 102 also comprises a lenslet array 11 comprising n microlenses 111, 112, 113, 11 n, n being an integer greater than or equal to 2. For purposes of illustration, the lenslet array 11 is shown with a relative small number of microlenses, but the number of microlenses may extend up to several thousand or even one or several million of microlenses. A group of photosensors of the photosensor array 13 are optically associated with each microlens 111 to 11 n of the lenslet array 11. For example, each microlens 111 to 11 n of the lenslet array 11 is sized to correspond to an array of 2x1, 4x4 or 10x10 photosensors. A group of photosensors associated with a microlens (or said differently, a group of photosensors under the microlens) form a micro-image associated with this microlens, each photosensor of the group of photosensors forming a pixel of the micro-image. Each photosensor of the plurality of photosensors optically associated with one single microlens enables to acquire raw data representative of a pixel of the scene according to one position (acquisition of as many parallaxes as pixels). According to a variant, the lens unit 101 and the camera body 102 collectively form one single body and are assembled without being detachable.

The lens unit 101 comprises a camera lens 10, also called a main lens or primary lens, which is advantageously formed of one or more lens elements, only one lens element 10 being depicted in figure 1 for clarity purpose.

The plenoptic camera 1 advantageously comprises a hardware module 103 configured for detecting a change in one or more parameters of the camera lens 10, for example a change of the focal length of the camera lens and/or a change of the focussing distance occurring when focalizing or zooming. A change of the focal length of the camera lens and/or a change of the focussing distance occurring when focalizing or zooming results in a change of the distance between the camera lens 10 and the lenslet array 11. The hardware module is advantageously configured to perform the calibration of the plenoptic camera 1, i.e. by determining the center of each micro-image or of each microlens, as described with more details hereinafter. According to a variant, the hardware module is configured to store metadata comprising the coordinates of the centers of the micro-images and/or of the microlenses. The module may be comprised in the camera body 102 or in the lens unit 101. The module advantageously comprises one or several processors 1031 associated with a memory, for example Random Access Memory or RAM 1032 comprising one or more registers. The memory stores instructions of one or more algorithms implementing the method of calibrating the plenoptic camera. According to a variant, the module takes the form of a programmable logical circuit of type FPGA (Field-Programmable Gate Array) for example, ASIC (Application-Specific Integrated Circuit) or a DSP (Digital Signal Processor). The module may also comprise an interface configured to receive and transmit data such as control parameters input by a user via a user interface to set the plenoptic camera 1, the user interface being for example displayed on a display screen (for example a LCD or an OLED display) arranged for example on the camera body 102.

According to a variant, the module is not comprised in the plenoptic camera but connected to the plenoptic camera via a wired connection (for example via USB (Universal Serial Bus)) or via a wireless connection (for example via Bluetooth, Wi-Fi or ZigBee). According to this variant, the module advantageously comprises a transmitter to exchange data with the plenoptic camera.

The plenoptic camera 1 is equally of the type 1.0, corresponding to a plenoptic camera wherein the distance between the lenslet array 11 and the photosensor array 13 is equal to the microlenses focal length, or of the type 2.0 otherwise (also called focused plenoptic camera).

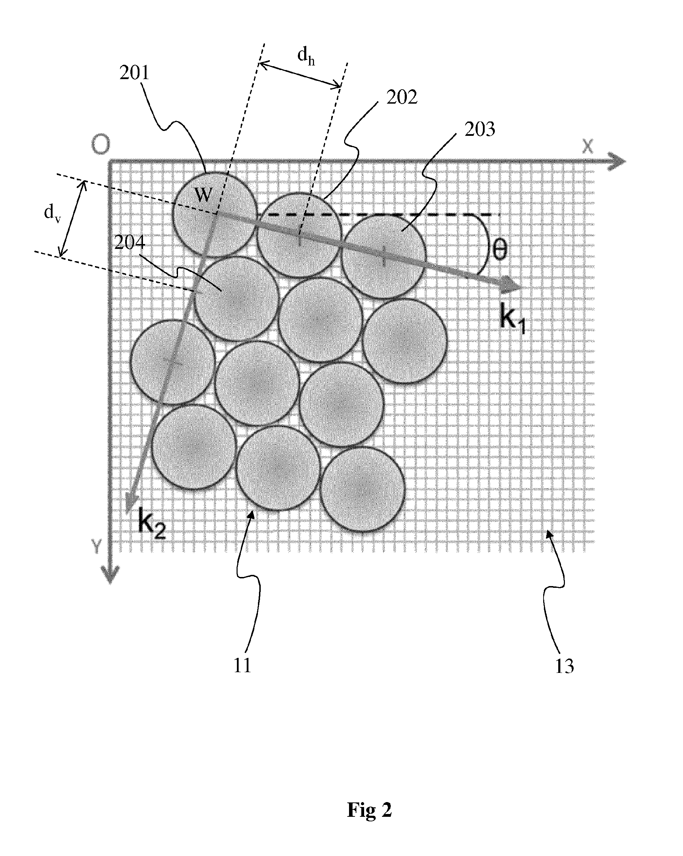

**Figure 2** shows the layout of the lenslet array 11, or a part of it, with regard to the photosensor array 13, according to an illustrative and non-limiting embodiment of the present principles. The photosensor array 13 consists of a matrix of pixels, the spatial coordinates of which are expressed in the coordinate system (O, x, y) with O the origin of the coordinate system, [Ox) the horizontal axis and [Oy) the vertical axis. The microlenses of the lenslet array 11 are arranged in a quincunx arrangement (also called hexagonal grid) according to the particular embodiment of figure 2 in a coordinate system $(C_1, k_1, k_2)$ different from the coordinate system (O, x, y). C1 is the origin of the basis $(C_1, k_1, k_2)$ and corresponds for example to the center of the topmost and leftmost microlens of the lenslet array 11. The coordinate system (CS) of the photosensor array 13 is called Cartesian CS and the CS of the lenslet array 11 is called microlens center CS. As can be seen in Figure 2, there is a rotational offset $\theta$ and a translational offset $O - C_1$ between the Cartesian CS and the microlens center CS, for example due to the manufacturing process of the plenoptic camera 1.

If x and k are respectively the coordinates of the center of a microlens micro-image in the Cartesian CS and in the microlens center CS, the system transformation matrix T and c the offset vector between the origins O and $C_1$ are determined such that:

$$x = Tk + c \qquad\qquad\qquad \text{Equation 1}$$

$$\text{With } T = \begin{pmatrix} p & q \\ r & s \end{pmatrix} \cdot \begin{pmatrix} d_h & 0 \\ 0 & d_v \end{pmatrix} \cdot \begin{pmatrix} \cos(\theta) & -\sin(\theta) \\ \sin(\theta) & \cos(\theta) \end{pmatrix} \qquad \text{Equation 2}$$

Wherein p, q, r and s are parameters specific to the plenoptic camera, for example p=1, q=1/2, r=0 and $s=\sqrt{3}/2$ for a plenoptic camera of the brand Lytro©, these parameters being inferred from the manufacturer arrangement of the lenslet array; for example, in the Lytro© camera, the microlenses are arranged in a quincunx arrangement and p, q, r and s are chosen to convert the position of the microlenses from the orthogonal grid (or array) to the hexagonal grid (or array);

$d_h$ and $d_v$ correspond respectively to the distance between the centers of two adjacent microlenses along the horizontal axis and the vertical axis, respectively, of the microlens center CS;

$\theta$ corresponds to the rotational offset between the Cartesian CS and the microlens center CS, or said differently, $\theta$ corresponds to the angle between the horizontal axis of the Cartesian CS and the horizontal axis of the microlens center CS.

The first matrix of Equation 2 accounts for the orthogonal to hexagonal grid conversion due to the microlens arrangement, the second matrix of Equation 2 deals with the vertical and horizontal shears and the third matrix of the Equation 2 is the rotation matrix.

The parameters $d_h$, $d_v$ and $\theta$ are representative of the position of the lenslet array (and thus of each microlens of the lenslet array) with regard to the photosensor array. Values for $d_h$, $d_v$ and $\theta$ are advantageously provided by the manufacturer, for example in the form of metadata stored in a memory comprised in the plenoptic camera, or are inferred from the manufacturer arrangement of the lenslet array, for example with a calibration algorithm known by the skilled person in the art, based on the use of white images. A set of values for $d_h$, $d_v$ and $\theta$ is advantageously provided for each white image of a stack of white images used in the calibration process of the plenoptic camera, each white image of the stack being for a different value of the effective length between the camera lens 10 and the lenslet array 11. White images are for example provided by the manufacturer of the plenoptic camera, a white image corresponding for example to an image taken through a white Lambertian diffuser for a given number of values of L, i.e. a white image is taken for a given adjustment of L. According to a variant, the white images are acquired by the user of the plenoptic camera before starting the calibration process.

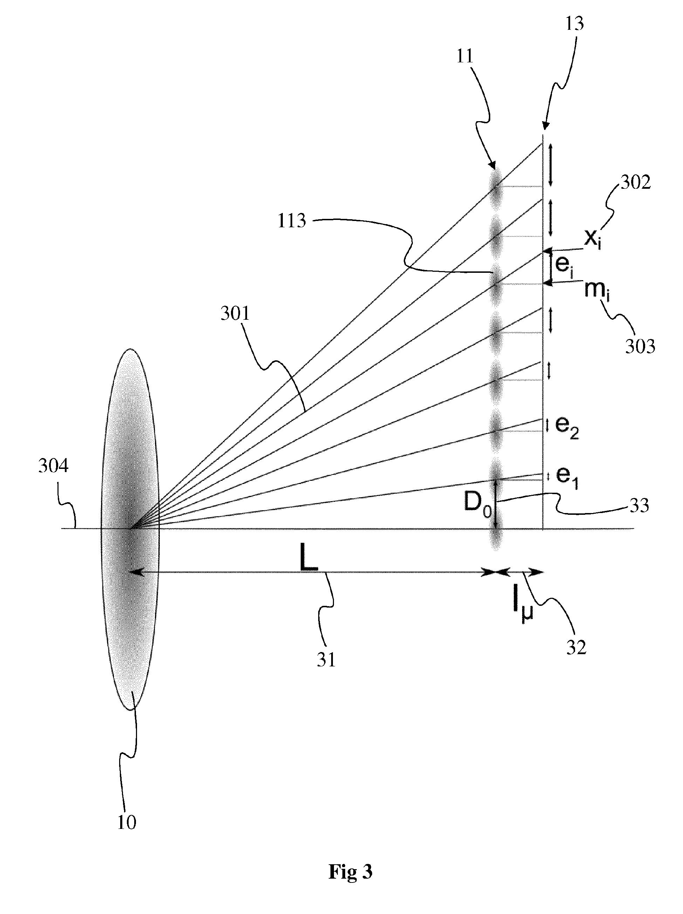

**Figure 3** shows a relationship between the centers of the microlens micro-images formed on the photosensor array of the plenoptic camera and the centers of the microlenses associated with the microlens micro-images respectively, according to an illustrative and non-limiting one-dimensional embodiment of the present principles. With each microlens is associated a micro-image, which is obtained from the rays of light passing through the considered microlens and hitting the pixels of the photosensor array optically associated with the considered microlens. The center $x_i$ 302 of a micro-image associated with a given microlens 113 corresponds to a point (for example a photosensor or a part of a photosensor) of the photosensor array concentrating the rays of light originating from the optical center of the camera lens 10, for example the ray of light 301 that passes through the center of the microlens 113, and passing through the given microlens 113. The orthogonal projection of the center of the microlens 113 is illustrated with the point $m_i$ 303. The coordinates of $m_i$ 303 correspond to the coordinate of the center of the microlens 113 expressed in the Cartesian CS. As can be seen on Figure 3, there is a spatial shift $e_i$ between the point $x_i$ 302 and the point $m_i$ 303 along the vertical axis of the Cartesian CS. The shift $e_i$ is for example determined from the following equation:

$$e_i = i \ \frac{D_0 l_\mu}{L} \qquad\qquad \text{Equation 3}$$

Wherein i corresponds to an index associated with the microlens, i being an integer, i enabling to classify the microlenses according to their position with regard to the vertical axis of the Cartesian CS, i=0 being associated with the microlenses located at the level of the main optical axis 304 of the camera lens 10 and i increasing when moving away from the main optical axis; according to the example of figure 3, the index is i associated with the microlens 113 is equal to 5;

The distance $D_o$, identified by the reference number 33, corresponds to the distance between two adjacent microlenses, or equivalently the size of a microlens according to the vertical axis of the Cartesian CS, given that there is no spatial gap between the microlenses on the lenslet array and that all microlenses have substantially the same size (i.e. with a variation less than a few percent, e.g. less than 2 or 3%, between two different microlenses);

The distance $l_\mu$, identified by the reference number 32, corresponds to the distance between the lenslet array 11 and the photosensor array according to a horizontal axis corresponding to the main optical axis 304, $l_\mu$ being a constant value equal to the microlenses focal length for plenoptic cameras of type 1.0;

The distance L, identified by the reference number 31, corresponds to the effective distance between the center of the camera lens 10 and the lenslet array 11 according to a horizontal axis corresponding to the main optical axis 304.

As can be seen on Figure 3, the shift $e_i$ is proportional to the index i, i.e. to the position of the considered microlens along the vertical axis, for a given plenoptic camera with a given L.

The coordinates ($x_{mi}$, $y_{mi}$) of $m_i$ 303 in the Cartesian CS are determined with the following equation for each microlens of index i:

$$m_i = x_i - e_i$$

Equation 4

The advantage of $m_i$ with regard to $x_i$ is that $m_i$ remains the same for any L, i.e., for any focus of the camera lens or any zoom change. Knowing $m_i$, $D_o$, $I_\mu$ and L, it is easy to obtain the center of any micro-image, thus to calibrate the plenoptic camera when a change in zoom or focus occurs.

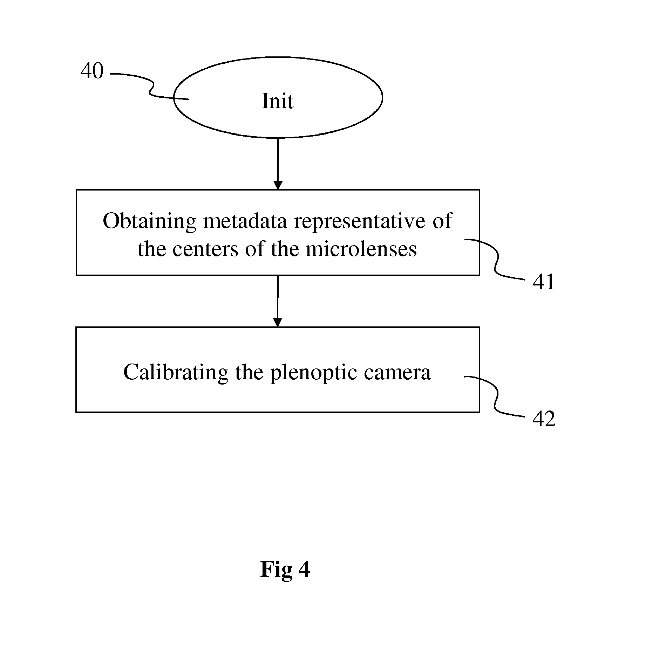

**Figure 4** shows a method of calibrating the plenoptic camera 1, according to an illustrative and non-limiting embodiment of the present principles.

During an initialisation step 40, the different parameters of the plenoptic camera, notably the parameters of the camera lens, are initialized in any way. The parameters are for example initialized when powering up the plenoptic camera and/or when changing the parameter of the camera lens, for example the focal length, when zooming or focalizing.

Then during a step 41, information representative of the centers of the microlenses is obtained. The information corresponds for example to the coordinates of each center of each microlens expressed in the Cartesian CS, i.e. in the space of the photosensors array. According to a variant, the information corresponds to the coordinates of each center of each microlens expressed in the microlens center CS, i.e. in the space of the photosensor array. According to another variant, the information corresponds to the coordinates of the center of one of the microlens, called reference microlens or reference center, the coordinates of the other centers being expressed with regard to the reference center. For example, if x and y are the coordinates of the reference center, the coordinates of another center may be x+dx and y+dy wherein dx corresponds to the distance between the another center and the reference center according to the horizontal axis and dy corresponds to the distance between the another center and the reference center according to the vertical axis.

According to a specific embodiment, the information representative of the centers of the microlenses is obtained by retrieving it from a storage device, for example a RAM memory or a flash memory. The storage device is for example embedded in the plenoptic camera. According to another variant, the storage device is a remote memory, the information being received by the plenoptic camera via a wired connection (for example via USB (Universal Serial Bus)) or a wireless connection (for example by using a Bluetooth connection of a Wi-Fi connection). According to this example, the plenoptic camera comprises a receiving interface, for example an interface USB-compatible and/or a wireless interface.

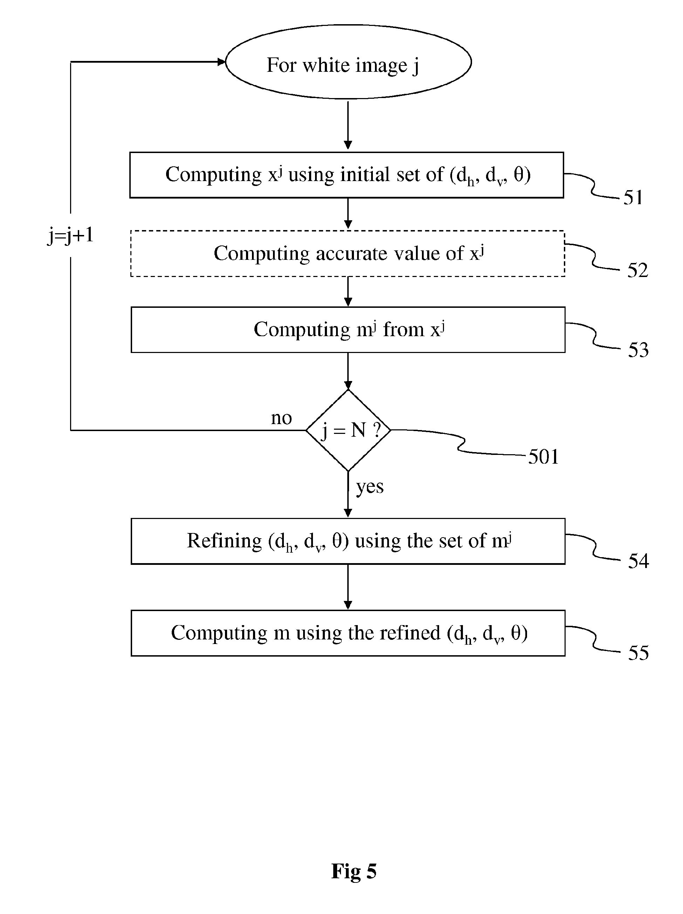

According to another specific embodiment, the information representative of the centers of the microlenses is obtained by determining or calculating it, for example by implementing the process described with regard to figure 5.

Then during a step 42, the plenoptic camera is calibrated by using the information representative of the centers of the microlenses obtained at step 41. The calibration corresponds advantageously to determining the center of each micro-image of the raw image, for example by using the equation 4. The calibration of the plenoptic camera enables to perform the demultiplexing.

**Figure 5** shows a method of determining the information representative of the centers of the microlenses of the lenslet array 11, according to an illustrative and non-limiting embodiment of the present principles. The following steps are described with regard to a given microlens of the lenslet array. Naturally, the same steps may be reiterated for each microlens of the lenslet array, or for only a part of the microlenses of the lenslet array.

Steps 51 to 53 are advantageously reiterated for each white image j of a stack of N white images, N being an integer greater than or equal to 1, starting with j=1 and ending with j=N. A set of initial values for $d_h$, $d_v$ and $\theta$ is advantageously associated with each white image of the stack. These values are said "initial" as they are inferred from the manufacturer arrangement of the lenslet array and may be considered as approximate values. The values $d_h$, $d_v$ and $\theta$ are different or not for each white image of the stack. A set of values $(d_h, d_v, \theta)$ is for example associated with each white image of the stack under the form of metadata associated with the white image. The different sets of values $(d_h, d_v, \theta)$ are for example provided under the form of a Look-Up Table (LUT) with the stack of white images, an index being for example associated with each white image and the LUT making the link between the different indices and the different sets of $(d_h, d_v, \theta)$, one to one.

Steps 51 to 55 will be described by using the non-limiting example of the microlens 113 of figure 3 and its associated microlens micro-image. Naturally, the same steps may be advantageously reiterated for all microlenses of the lenslet array 11, or for only a part of the microlenses of the lenslet array.

Steps 51 to 53 are described by using the example of a white image j, the index j being associated with any parameter or value to point out the relationship between the white image j and this value or parameter, j being used as subscript of the value or parameter.

During step 51, the coordinates $(u^j, v^j)$ of the center $x^j$ of the micro-image associated with the microlens 113 are computed by using the parameters representative of the position of the microlenses with regard to the photosensor array, i.e. the parameters $(d_h, d_v, \theta)^j$. The parameters $(d_h, d_v, \theta)^j$ are advantageously specific to the $j^{th}$ white image. The coordinates are advantageously determined by using the equation 1, i.e.:

$$\begin{pmatrix} u^j \\ v^j \end{pmatrix} = T . \begin{pmatrix} k_{k1} \\ k_{k2} \end{pmatrix} + \begin{pmatrix} c_x \\ c_y \end{pmatrix}$$

Wherein $u^j$ and $v^j$ are the coordinates of the center of the micro-image associated with the microlens 113 in the Cartesian CS;

$k_{k1}$ and $k_{k2}$ are the coordinates of the microlens 113 (or of its center) in the microlens centers CS, (0, 0) being the coordinates of the origin microlens, for example the topmost and leftmost microlens 201 of figure 2, (0, 1) being the coordinates of the microlens 202 located to the right of the origin microlens along the axis $k_1$ of the microlens centers CS, (1, 0) being the coordinates of the microlens 204 located below the origin microlens 201 along the axis $k_2$ of the microlens centers CS;

$c_x$ and $c_y$ corresponds to the distances between the origin O of the Cartesian CS and the origin W of the microlens centers CS along the axis X and Y respectively of the Cartesian CS.

Step 52 is an optional step that may be implemented or not, according to variants of the present principles. During step 52, a more accurate $x^j$ is determined. More accurate values of the coordinates ($u^j$, $v^j$) are advantageously determined by fitting a Gaussian mask to the microlens micro-images. The micro-image center $x^j$ in the raw image is advantageously computed as the local maximum positions of the convolution between the white image j and the Gaussian mask. These local estimation are next used in a global scheme with the aim of refining the parameters $d_h$, $d_v$ and $\theta$ of equations 1, 2 for the corresponding white image. After refining the parameters $d_h$, $d_v$ and $\theta$, equations 1, 2 are used to obtain the refined estimations of $x^j$ by such a model fitting method.

Then during step 53, the coordinates ($m_X^j$, $m_Y^j$) of the center $m^j$ of the microlens 113 are advantageously computed based on the coordinates ($u^j$, $v^j$) computed at step 51 or step 52 and on a shift between the position of the microlens 113 with regard to the photosensor array and the position of the micro-image formed on the photosensor array and associated with the microlens 113. Said differently, the shift correspond to the vertical distance between the projection of the microlens 113 onto the photosensor array (according to the main horizontal axis of the plenoptic camera) and the micro-image formed on the photosensor array and associated with the microlens 113. The shift corresponds for example to the distance between the lowest point of the projection of the microlens 113 and the lowest point of the micro-image or to the distance between the projection of the center of the microlens 113 and the center of the micro-image. The shift value is advantageously computed by using the equation 3. The computation of the coordinates ($m_X^j$, $m_Y^j$) of the center $m^j$ of the microlens 113 is advantageously performed by using the equation 4, i.e.:

$$\begin{pmatrix} m_X^j \\ m_Y^j \end{pmatrix} = \begin{pmatrix} u^j \\ v^j \end{pmatrix} - \begin{pmatrix} e_x^i \\ e_y^i \end{pmatrix}$$

wherein the index i corresponds to the $i^{th}$ microlens, e.g. i=5 for the microlens 113 according to the non-limiting one dimensional example of figure 3.

Steps 51 to 53 are advantageously reiterated for each white image of the stack, i.e. by starting with j=1 and incrementing j of 1 as long as the test 501 "J=N?" is not fulfilled. A set of $m^j$ is thus obtained, i.e. a group of values for the coordinates of m is obtained, i.e. advantageously one set of coordinates for each white image. $e^i$ being constant for a given microlens with regard to the white images, the coordinates of m slightly vary from a white image to another one if the parameters ($d_h$, $d_v$, $\theta$) vary between the white images. If step 52 is implemented, the Gaussian mask fitted to the microlens may also induce a difference in the computation of the coordinates of m between two different white images.

Then during step 54, values of ($d_h$, $d_v$, $\theta$) are refined using the set of $m^j$. To that aim, values of the parameters ($d_h$, $d_v$, $\theta$) are determined in such a way that these parameters minimize an error on the computation of the coordinates of $m^j$. For each white image is determined an optimal set of parameters ($d_h$, $d_v$, $\theta$) which enables to obtain values of $m^j$ for each white image with a difference between two $m^j$ that is minimal for each pair of white images. Based on the computations of the different $m^j$, a least squares error criterion is set to find the parameters ($d_h$, $d_v$, $\theta$) resulting in the best fit of the white images, using the set of values for $m^j$ and the equations 1, 2 and 4. The optimal set of values for ($d_h$, $d_v$, $\theta$) for each white image is obtained as a solution to a least square error problem, i.e. by solving the following:

$$\min \sum_j \left\| m^j - (x^j - e) \right\|_2^2$$

Then during a step 55, a final m is computed based on the set of parameters ($d_h$, $d_v$, $\theta$) computed at step 54 for each white image, by using the equations 4, 3 and 1. As the different sets of ($d_h$, $d_v$, $\theta$) have been determined to minimize the error in computing the different $m^j$, the different values of $m^j$ computed with the parameters ($d_h$, $d_v$, $\theta$) determined at step 54 are very close to each other, i.e. the difference between the maximal value of m and the minimal value of m is less than a threshold corresponding to the error, for example less than 1 or 2 %. The final values of the coordinates of m are obtained for example by averaging the different values of $m^j$ obtained with the equations 4, 3 and 1 with the parameters ($d_h$, $d_v$, $\theta$) determined at step 54. According to a variant, the final values of the coordinates of m are obtained by determining the median value of $m^j$ obtained with the equations 4, 3 and 1 with the parameters ($d_h$, $d_v$, $\theta$) determined at step 54.

Steps 51 to 55 are advantageously reiterated for each microlens of the lenslet array, which enables to determine with a good precision the center of each microlens.

The information representative of the centers of the microlenses thus determined is then for example memorized in a storage device, for example a RAM memory comprised in the plenoptic camera. Each time the plenoptic camera has to be calibrated, for example when acquiring a raw image of a scene after having changed the focus of the camera lens or the zoom, the center of the microlenses micro-image are easily determined knowing the information representative of the centers of the microlenses and the camera parameters L, $D_o$ and $l_\mu$, via the equation 4 which gives:

$$x_i = m_i + e_i$$

Indeed, the coordinates of the centers of the microlenses are invariant with regard to the change of focus or zoom in contrast to the micro-images centers. Once these coordinates have been determined, the estimation/computation of the centers of the micro-images is easy and quick, enabling a real time demultiplexing of the images of a scene acquired with the plenoptic camera, even if a change in focus or zoom has been made before the acquisition of the scene.

According to a further embodiment of the present principles, a refined value of L may be optionally computed by using the final values $m^j$ obtained at step 55 and the final $x^j$ obtained at step 54 with the parameters ($d_h$, $d_v$, $\theta$), the refined value of L being computed with the use of equation 4 which gives:

$$e_i = x_i\text{-}m_i \qquad \text{with } e_i = i\ \frac{D_0 l_\mu}{L}$$

L may be represented either in meters of in the abstract form of $\delta L$ multiplied by an integer representing the number of steps, a step corresponding to unit of zoom / focus change.

According to a further embodiment of the present principles, a refined value of $D_o$ and/or a refined value of $l_\mu$ is / are optionally computed using the mismatch between the final m obtained at step 55 and the set of $m^j$ obtained with the different set of parameters ($d_h$, $d_v$, $\theta$) obtained at step 54, by using the equations 3 and 4.

According to an optional variant, the refined value of L and/or the refined value of $D_o$ and/or the refined value of $l_\mu$ is /are memorized in a storage device, for example a RAM memory comprised in the plenoptic camera.

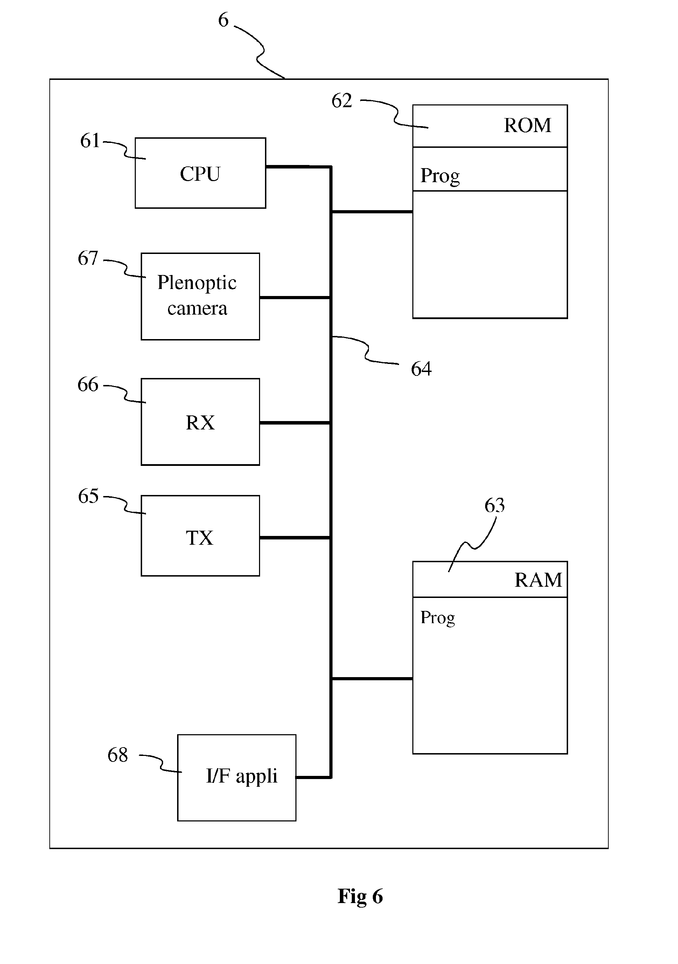

**Figure 6** diagrammatically illustrates a hardware embodiment of a telecommunication device 7, corresponding for example to a smartphone or a tablet that embodies a plenoptic camera in accordance with an aspect of the present principles.

The telecommunication device 7 comprises the following elements, connected to each other by a bus 74 of addresses and data that also transports a clock signal:

- a microprocessor 71 (or CPU),
- a non-volatile memory of ROM (Read Only Memory) type 72,
- a Random Access Memory or RAM 73,
- a radio interface 76,
- an interface 75 adapted for the transmission of data,
- a plenoptic camera 77, corresponding for example to the plenoptic camera 2 of figure 2,
- an MMI (Man Machine Interface) 78 adapted for displaying information for a user and/or inputting data or parameters.

It is noted that the word "register" used in the description of memories 72 and 73 designates in each of the memories mentioned, a memory zone of low capacity as well as a memory zone of large capacity (enabling a whole programme to be stored or all or part of the data representing data received and decoded).

The memory ROM 72 comprises in particular a "prog" program.

The algorithms implementing the steps of the method specific to the present disclosure and described below are stored in the ROM 72 memory associated with the telecommunication device 7 implementing these steps. When powered up, the microprocessor 71 loads and runs the instructions of these algorithms.

The random access memory 73 notably comprises:

- in a register, the operating programme of the microprocessor 71 responsible for switching on the telecommunication device 7,
- reception parameters (for example parameters for modulation, encoding, MIMO, recurrence of frames),
- transmission parameters (for example parameters for modulation, encoding, MIMO, recurrence of frames),
- incoming data corresponding to the data received and decoded by the receiver 76,
- decoded data formed to be transmitted at the interface to the application 75,
- parameters of the camera lens and/or information representative of the centers of the microlenses of the lenslet array.

Other structures of the telecommunication device 7 than those described with respect to figure 7 are compatible with the present disclosure. In particular, according to variants, the telecommunication device may be implemented according to a purely hardware realisation, for example in the form of a dedicated component (for example in an ASIC (Application Specific Integrated Circuit) or FPGA (Field-Programmable Gate Array) or VLSI (Very Large Scale Integration) or of several electronic components embedded in an apparatus or even in a form of a mix of hardware elements and software elements.

The radio interface 76 and the interface 75 are adapted for the reception and transmission of signals according to one or several telecommunication standards such as IEEE 802.11 (Wi-Fi), standards compliant with the IMT-2000 specifications (also called 3G), with 3GPP LTE (also called 4G), IEEE 802.15.1 (also called Bluetooth)...

According to a variant, the telecommunication device does not include any ROM but only RAM, the algorithms implementing the steps of the method specific to the present disclosure being stored in the RAM.

Naturally, the present disclosure is not limited to the embodiments previously described.

In particular, the present disclosure is not limited to a plenoptic camera but also extends to the method of calibrating the same and to the hardware circuitry implementing the calibration method.

Telecommunication devices includes, for example, smartphones, smartwatches, tablets, computers, mobile phones, portable/personal digital assistants ("PDAs"), and other devices that facilitate communication of information between end-users but also set-top-boxes.

The method of calibrating the plenoptic camera described herein may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A plenoptic camera (1) comprising a camera lens (10), a lenslet array (11) comprising a plurality of microlenses (111, 112, 113, 11 n), a photosensor array (13), **characterized in that** the plenoptic camera (1) further comprises:

   - means (103) for obtaining information representative of the centers of said microlenses;
   - means (103) for calibrating said plenoptic camera from said information.

2. The plenoptic camera according to claim 1, further comprising a memory (1032) comprising said information, said information being obtained from said memory.

3. The plenoptic camera according to claim 2, wherein said means (103) for obtaining correspond to a processing unit (1031) configured to determine said information from a stack of at least one white image, each white image of said stack being provided for a different parameter representative of a length (31) between said camera lens (10) and said lenslet array (11).

4. The plenoptic camera according to claim 3, wherein said processing unit (1031) is further configured to, for each microlens (111, 112, 113, 11 n):

   - for each white image, compute first coordinates of the center of said microlens from parameters representative of the position of said microlens with regard to said photosensor array (13) and of a value representative of a shift between the position of said microlens (113) with regard to the photosensor array (13) and a position of a micro-image associated with said microlens (13) formed on said photosensor array (13),
   - for each white image, determine values of said parameters representative of the position of said microlens (113) minimizing an error on said computing of the first coordinates by using a plurality of white images of said stack,
   - determine information representative of the center (303) of said microlens (113) from said determined values of the parameters representative of the position of said microlens (113).

5. The plenoptic camera according to claim 4, wherein said processing unit (1031) is further configured to compute said value representative of a shift as a function of an index associated with said microlens (113), a parameter representative of a size of said microlens (113), a parameter representative of a distance (32) between said lenslet array (11) and said photosensor array (13), and said parameter representative of the length (31) between said camera lens (10) and said lenslet array (11).

6. The plenoptic camera according to one of claims 4 and 5, wherein said processing unit (1031) is further configured to compute a refined value of said parameter representative of the length (31) between said camera lens (10) and said lenslet array (11) based on said determined information.

7. The plenoptic camera according to one of claims 4 to 6, wherein said processing unit (1031) is further configured to compute a refined value for at least one of said parameter representative of the size of said microlens (113) and said parameter representative of the distance (32) between said lenslet array (11) and said photosensor array (13) based on said determined information and on said determined values of said parameters representative of the position of said microlens (113).

8. A method of calibrating a plenoptic camera, said plenoptic camera comprising a camera lens, a lenslet array comprising a plurality of microlenses and a photosensor array, **characterized in that** the method comprises:

   - obtaining (41) information representative of the centers of said microlenses;
   - calibrating (42) said plenoptic camera from said information.

9. The method according to claim 8, wherein said obtaining (41) comprises retrieving said information from a storage device.

10. The method according to claim 8, wherein said obtaining (41) comprises determining said information from a stack of at least one white image, each white image of said stack being provided for a different parameter representative of a length between said camera lens and said lenslet array.

**11.** The method according to claim 10, wherein said determining (42) comprises, for each microlens:

- for each white image, computing (53) first coordinates of the center of said microlens from parameters representative of the position of said microlens with regard to said photosensor array and of a value representative of a shift between the position of said microlens with regard to the photosensor array and a position of a micro-image associated with said microlens formed on said photosensor array,
- for each white image, determining (54) values of said parameters representative of the position of said microlens minimizing an error on said computing of the first coordinates by using a plurality of white images of said stack,
- determining (55) information representative of the center of said microlens from said determined values of the parameters representative of the position of said microlens.

**12.** The method according to claim 11, wherein said value representative of a shift is computed as a function of an index associated with said microlens, a parameter representative of a size of said micro-lens, a parameter representative of a distance between said lenslet array and said photosensor array, and said parameter representative of the length between said camera lens and said lenslet array.

**13.** The method according to one of claims 11 and 12, further comprising computing a refined value of said parameter representative of the length between said camera lens and said lenslet array based on said determined information.

**14.** The method according to one of claims 11 to 13, further comprising computing a refined value for at least one of said parameter representative of the size of said micro-lens and said parameter representative of the distance between said lenslet array and said photosensor array based on said determined information and on said determined values of said parameters representative of the position of said microlens.

**15.** A computer program product comprising instructions of program code for executing at least a step of the method according to one of claims 9 to 14, when said program is executed on a computer.

**Fig 1**

**Fig 2**

**Fig 3**

40 — Init

Obtaining metadata representative of
the centers of the microlenses — 41

Calibrating the plenoptic camera — 42

**Fig 4**

For white image j

Computing $x^j$ using initial set of $(d_h, d_v, \theta)$ — 51

Computing accurate value of $x^j$ — 52

Computing $m^j$ from $x^j$ — 53

$j = N$ ?

no

yes

j=j+1

501

Refining $(d_h, d_v, \theta)$ using the set of $m^j$ — 54

Computing m using the refined $(d_h, d_v, \theta)$ — 55

**Fig 5**

6

62

ROM

Prog

61

CPU

67

Plenoptic camera

64

66

RX

65

TX

63

RAM

Prog

68

I/F appli

**Fig 6**

Europäisches
Patentamt

European
Patent Office

Office européen
des brevets

# EUROPEAN SEARCH REPORT

Application Number

EP 15 30 5512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHO DONGHYEON ET AL: "Modeling the Calibration Pipeline of the Lytro Camera for High Quality Light-Field Image Reconstruction", 2013 IEEE INTERNATIONAL CONFERENCE ON COMPUTER VISION, IEEE, December 2013 (2013-12), pages 3280-3287, XP032572834, ISSN: 1550-5499, DOI: 10.1109/ICCV.2013.407 [retrieved on 2014-02-28] * abstract * * page 3280, left-hand column, line 1 - right-hand column, line 11 * * page 3282, right-hand column, line 22 - page 3283, left-hand column, line 21 * * page 3282, algorithm 1 * ----- | 1-15 | INV. G06T7/00 H04N5/232 |
| X | CHELSEA M. THOMASON ET AL: "Calibration of a Microlens Array for a Plenoptic Camera", 52ND AEROSPACE SCIENCES MEETING, 10 January 2014 (2014-01-10), XP055213552, Reston, Virginia DOI: 10.2514/6.2014-0396 ISBN: 978-1-62-410256-1 * abstract * * page 4, line 1 - page 11, line 6 * ----- -/-- | 1-15 | TECHNICAL FIELDS SEARCHED (IPC) G06T H04N |

The present search report has been drawn up for all claims

| Place of search | Date of completion of the search | Examiner |
|---|---|---|
| Munich | 16 September 2015 | Herter, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 5512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DANSEREAU DONALD G ET AL: "Decoding, Calibration and Rectification for Lenselet-Based Plenoptic Cameras", IEEE COMPUTER SOCIETY CONFERENCE ON COMPUTER VISION AND PATTERN RECOGNITION. PROCEEDINGS, IEEE COMPUTER SOCIETY, US, 23 June 2013 (2013-06-23), pages 1027-1034, XP032493268, ISSN: 1063-6919, DOI: 10.1109/CVPR.2013.137 [retrieved on 2013-10-02] * the whole document * | 1-15 | |
| A | N. ZELLER ET AL: "Calibration and accuracy analysis of a focused plenoptic camera", ISPRS ANNALS OF PHOTOGRAMMETRY, REMOTE SENSING AND SPATIAL INFORMATION SCIENCES, vol. II-3, 7 August 2014 (2014-08-07), pages 205-212, XP055213549, DOI: 10.5194/isprsannals-II-3-205-2014 * the whole document * | 1-15 | |
| A | JOHANNSEN OLE ET AL: "On the Calibration of Focused Plenoptic Cameras", 5 September 2014 (2014-09-05), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 302 - 317, XP047269364, ISSN: 0302-9743 ISBN: 978-3-540-89964-8 * the whole document * | 1-15 | |

TECHNICAL FIELDS
SEARCHED (IPC)

-/--

The present search report has been drawn up for all claims

| Place of search | Date of completion of the search | Examiner |
|---|---|---|
| Munich | 16 September 2015 | Herter, Jochen |

EPO FORM 1503 03.82 (P04C01)

Europäisches
Patentamt

European
Patent Office

Office européen
des brevets

# EUROPEAN SEARCH REPORT

Application Number

EP 15 30 5512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/127901 A1 (GEORGIEV TODOR G [US] ET AL) 23 May 2013 (2013-05-23) * the whole document * ----- | 1-15 | |
| A | EP 2 736 262 A2 (RICOH CO LTD [JP]) 28 May 2014 (2014-05-28) * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 16 September 2015 | Herter, Jochen |

**EP 3 079 121 A1**

## ANNEX TO THE EUROPEAN SEARCH REPORT
## ON EUROPEAN PATENT APPLICATION NO.

EP 15 30 5512

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2015

| Patent document cited in search report | | | Publication date | Patent family member(s) | | | Publication date |
|---|---|---|---|---|---|---|---|
| US 2013127901 | A1 | | 23-05-2013 | NONE | | | |
| EP 2736262 | A2 | | 28-05-2014 | EP | 2736262 | A2 | 28-05-2014 |
| | | | | JP | 2014106970 | A | 09-06-2014 |
| | | | | US | 2014146184 | A1 | 29-05-2014 |

EPO FORM P0459

For more details about this annex : see Official Journal of the European Patent Office, No. 12/82

22

**EP 3 079 121 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013105151 A